# EUROPEAN PATENT APPLICATION

(11) **EP 4 706 962 A1**
(43) Date of publication of application: **11.03.2026**
(21) Application number: 24199449.0
(22) Date of filing: 10.09.2024
(51) Int. Cl.: B32B 27/40, C08G 18/10, C08G 18/48, C08G 18/76, C08G 18/80, C09J 175/04, C08G 18/28, C08G 18/79

(54) **ONE-COMPONENT POLYURETHANE ADHESIVE COMPOSITION FOR FILM LAMINATION**

(71) Applicant: Henkel AG & Co. KGaA, 40589 Düsseldorf (DE)
(72) Inventor: Franken, Marcel, 53819 Neunkirchen-Seelscheid (DE); Fothen, Christian, 41464 Neuss (DE); Jungholt, Nina, 47661 Issum (DE); Meyer, Daniela, 50171 Kerpen (DE)

(57) **Abstract**

The present invention relates to a one-component polyurethane adhesive composition for film lamination, in particular in food flexible packaging. Further, the present invention relates to method of manufacturing a laminate by using the one-component polyurethane adhesive composition and the laminate obtainable by the described method.

## Description

### Technical Fields

The present invention relates to a one-component polyurethane adhesive composition for film lamination, in particular in food flexible packaging. Further, the present invention relates to method of manufacturing a laminate by using the one-component polyurethane adhesive composition and the laminate obtainable by the described method.

### Backgrounds

Flexible packaging material is prepared by laminating two or more layers of film. Each film is chosen for specific properties. For example, a flexible packaging material can be a lamination of three layers. The inner layer will contact the packaged product. Polypropylene has desirable product contact properties as well as heat sealability and can be used as an inner layer. The middle layer will provide a barrier to moisture, oxygen and/or light. Metal films or foils have desirable barrier properties and metal films such as aluminum foil can be used as a middle layer. The outer layer will provide protection for the package and also provides a surface for printing information such as contents, packaging date, warnings, etc. Polyester films are tough, can receive printing ink and can be used as an outer layer. Each layer of the flexible packaging material is bonded to the adjacent layer by an adhesive. Adhesive can be applied to the layer from a solution in a suitable solvent using gravure or smooth roll coating cylinders. The laminated packaging material is then dried and accumulated in rolls. The rolls are kept in storage for a predetermined amount of time to allow the adhesive to cure before use in some applications.

Although there are many possible types of adhesives, polyurethane based adhesives are preferred for use in flexible packaging materials because of their many desirable properties including good adhesion to the materials in each layer, high bonding strength, resistance to heat such as from heat sealing or retorting, and resistance to chemically aggressive products. Polyurethane adhesives are marketed as one-component (or one-part/pack) or two-component adhesives. In many cases, the use of two-component adhesives is difficult for the user because application of the adhesive itself is preceded by often problematic mixing of the two adhesive components. In addition, the curing times of known two-component polyurethane adhesives are still too slow for the film lamination process.

One-component polyurethane adhesives are also known. They normally contain aromatic polyisocyanates and polyols or isocyanate terminated prepolymers produced therefrom and catalysts and other additives. In the presence of atmospheric moisture, they cure in 10 to 60 minutes in the present of catalysts. The catalysts are usually tin compounds and/or tertiary amines used in concentrations of up to 1% by weight.

One-component polyurethane adhesives containing or produced from aliphatic diisocyanates are also known. Trimerization products of aliphatic diisocyanates are used in such one-component polyurethane adhesives because they contain only small amounts of volatile isocyanates and, hence, are toxicologically safer and do not have to be identified on labelling. Unfortunately, aliphatic isocyanates are attended by the disadvantage that they react far more slowly than aromatic isocyanates. Accordingly, they are unsuitable for many applications where particularly quick curing of the adhesive is crucial.

Although the curing rate of polyurethane adhesives based on aliphatic diisocyanates can be accelerated by increasing the quantity of catalyst in the adhesive, this does lead to problems which affect the quality of the adhesive and hence its acceptance by the user. Relatively high concentrations of catalyst often lead to non-storable adhesives because secondary reactions are also accelerated by the increased amount of catalyst and cause the viscosity of the adhesive to increase excessively within a few months, so that the adhesive becomes unusable. In addition, the open time of the adhesive, i.e. the time available to the user for assembling, aligning and pressing the films together after application of the adhesive, is reduced to an unacceptable level.

Therefore, it would be desirable to provide a one-component polyurethane adhesive composition which addresses the above issues and is suitable for bonding flexible films for packaging, especially in high-temperature food contact and medical retort applications.

### Summary of the invention

A first object of the invention is to provide a one-component polyurethane adhesive composition, comprising:
an isocyanate terminated prepolymer (A) being a reaction product of a reaction mixture comprising:
   an isocyanate terminated prepolymer (B) being a reaction product of a reaction mixture comprising toluene diisocyanate and a polyether polyol, and
a polyester polyol.

Another object of the invention is to provide a laminate of flexible packaging comprising the cured adhesive and the manufacturing method thereof.

### Brief description of the drawing

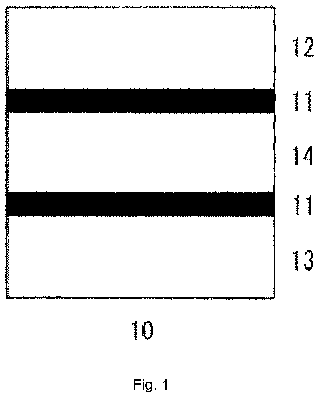

Figure 1 shows a sectional view of a food packaging film according to the present invention.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

Unless otherwise defined, all terms used in the disclosing the invention, including technical and scientific terms, have the meaning as commonly understood by one of the ordinary skill in the art to which this invention belongs to. By means of further guidance, term definitions are included to better appreciate the teaching of the present invention.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or process steps.

The recitation of numerical end points includes all numbers and fractions subsumed within the respective ranges, as well as the recited end points.

All references cited in the present specification are hereby incorporated by reference in their entirety. If reference is made herein to a molecular weight of a polymer, this reference refers to the average number weight Mₙ, unless stated otherwise. The number average molecular weight Mₙ of a polymer can, for example, be determined by gel permeation chromatography (GPC) according to DIN 55674 with THF as the eluent. If not stated otherwise, all given molecular weights are those determined by GPC, calibrated with polystyrene standards. The average molecular weight M_{w} can also be determined by GPC, as described for Mₙ.

The disclosed one-component polyurethane adhesive composition comprises or consists of:
an isocyanate terminated prepolymer (A) being a reaction product of a reaction mixture comprising or consisting of:
   an isocyanate terminated prepolymer (B) being a reaction product of a reaction mixture comprising toluene diisocyanate and a polyether polyol, and
a polyester polyol.

The one-component polyurethane adhesive composition is storage stable and moisture curable even containing no curing catalyst while excellent curing and open time can be achieved.

### Isocyanate terminated prepolymer (B)

The isocyanate terminated prepolymer (B) in the polyurethane adhesive composition according to the present invention is a toluene diisocyanate terminated polyether being a reaction product of a reaction mixture comprising a toluene diisocyanate and a polyether polyol, optionally in the presence of a catalyst.

The toluene diisocyanate may be 2,4-toluene diisocyanate, 2,6-toluene diisocyanate or the mixture thereof.

The polyether polyol is selected from a polyoxyalkylene polyol, the homopolymer thereof, the copolymer thereof, and mixture of the above. The polyether polyol is preferably a polyether diol which comprises primary hydroxyl groups or a mixture of primary and secondary hydroxyl groups. Examples of suitable polyether polyols are polyoxyalkylene polyols such as polyethylene glycol, polypropylene glycol, polytetramethyl glycol and polybutyl glycol, and polypropylene glycol is preferred. Also, homopolymers or copolymers of the listed polyoxyalkylene polyols as well as mixtures thereof are suitable for the purpose of the present invention. Particularly suitable copolymers are those comprising an adduct of a compound selected from the group consisting of ethylene glycol, propylene glycol, diethylene glycol, propylene glycol, triethylene glycol, 2-ethylhexandiol-1,3-glycerine, trimethylolpropane, trimethylolethane, tris(hydroxyphenyl)propane, triethanolamine and triisopropylamine with at least one compound selected from the group consisting of ethylene oxide, propylene oxide and butylene oxide.

Preferably, the isocyanate terminated prepolymer (B) has a free toluene diisocyanate content of no more than 0.5% by weight and preferably no more than 0.1% by weight of the prepolymer (B), so as to comply with the local regulations for food packaging materials. More preferably, the one-component adhesive composition prepared from the isocyanate terminated prepolymer (B) exhibited an excellent PAA (primary aromatic amine) decay determined by photometry according to § 64 of the Food, Commodities and Feed Code of the Federal Republic of Germany (LFGB) according to the method L 00.006.

The amount of toluene diisocyanate is stoichiometric excess the polyether polyol in order to obtain an isocyanate terminated prepolymer. In one embodiment, the isocyanate terminated prepolymer (B) has an NCO content of from 5% to 15%, preferably from 8% to 12%.

The isocyanate terminated prepolymer (B) may be obtained by preparation according to the conventional method known in the art or commercial products. Examples of the commercial products include Trixene DP9C, Adiprene L available from Lanxess, and Desmodur TG available from Covestro.

### Polyester polyol

The polyester polyol reacts with the isocyanate terminated prepolymer (B) to obtain the isocyanate terminated prepolymer (A).

Generally, there is no limitation to the molecular weight of the polyester polyol used in the adhesive composition as long as it has no negative effect on the properties of the adhesive composition and the cured adhesive. Preferably, the polyester polyol has a number averaged molecular weight Mₙ of 200 to 20000 g/mol, in particular from 500 to 10000 g/mol. In view of the storage stability of the adhesive composition, the polyester polyol having a number averaged molecular weight Mₙ of 1000 to 5000 g/mol is more preferred.

In the present invention, the polyester polyol preferably may have an acid value of 0.1 to 2 mgKOH/g. When the acid value of the polyester polyol is within the above range, the adhesive composition for food packaging films of the present invention has a viscosity more suited for application and is excellent in adhesion to a film. On the assumption that all acid groups included in 1 g of the resin are free acids, the "acid value" of the polyester polyol according to the present invention is expressed by a calculated value of a number of milligrams of potassium hydroxide which is needed to neutralize the acid. Therefore, even though the acid groups exist as a base in an actual system, they are assumed as a free acid. The "acid value" according to the present invention is determined by dissolving the polyester polyol in a solvent, adding phenolphthalein as an indicator, and titrating with a 0.1 mol/l potassium hydroxide-ethanol solution according to DIN 53240.

In the present invention, the polyester polyol may have a hydroxyl value of 5 to 350 mgKOH/g, preferably from 50 to 200 mgKOH/g, and more preferably from 100 to 150 mgKOH/g. When the hydroxyl value of the polyester polyol is within the above range, the adhesive composition for food packaging films of the present invention has a viscosity more suited for application and is more excellent in adhesion to a film. As used herein, the hydroxyl value means a number of mgs of potassium hydroxide which is required to neutralize acetic acid bonding to the hydroxyl group when 1 g of the resin is acetylated.

The "hydroxyl value" according to the present invention is determined according to DIN 51558 by adding an acetylation reagent to the polyester polyol, heating with a glycerin solution, allowing to cool, then adding phenolphthalein as an indicator, and titrating with a potassium hydroxide-ethanol solution.

In the present invention, the polyester polyol may have a glass transition temperature of -20°C to 100°C. The glass transition temperature of the polyester polyol is measured using a differential scanning calorimeter. With respect to a proper amount of a sample, a DSC curve was measured at a temperature rise rate of 10°C/minute and the temperature of an inflection point of the obtained DSC curve was regarded as the glass transition temperature.

The polyester polyol and its preparation are known in the art and may be a reaction product of a reaction mixture comprising at least one polyol and at least one polyfunctional carboxylic acid. The polyol may be selected from a cycloaliphatic polyol, a heterocyclic polyol, an aliphatic polyol and combination thereof. In one preferred embodiment, the polyol is one or more aliphatic polyols.

The aliphatic polyol may be linear or branched as long as it will not negatively affect the properties of the adhesive composition. The linear or branched aliphatic polyol may have a low molecular weight and two or more hydroxy groups. Examples of the linear or branched aliphatic polyol are ethylene glycol, propylene glycol (such as 1,2-propylene glycol and 1,3-propylene glycol), glycerol, pentaerythritol, trimethylolpropane, 1,4,6-octanetriol, butanediol, pentanediol, hexanediol, dodecanediol, octanediol, chloropentanediol, glycerol monallyl ether, glycerol monoethyl ether, diethylene glycol, 2-ethylhexanediol-1,4, 1,2,6-hexanetriol, 1,3,5-hexanetriol, 1,3-bis-(2-hydroxyethoxy)propane. In one embodiment, neopentyl glycol and hexanediol are not used in the adhesive composition due to the concern of migration potential. In another embodiment, it is more preferable to use the linear or branched aliphatic polyol such as diethylene glycol and/or propylene glycol.

The aliphatic polyol is present in the reaction mixture of the polyester polyol in an amount of 1% to 70% by weight, preferably 10% to 60% by weight based on the weight of the reaction mixture.

The polyester polyols are preparable by polycondensation of the above-mentioned polyols with a substoichiometric amount of a polyfunctional carboxylic acid to form polyester polyols according to the preparation method known in the art.

Preferably the polyfunctional carboxylic acids have from 2 to 14 carbon atoms, such as dicarboxylic acids and/or tricarboxylic acids, or their reactive derivatives, Examples of the dicarboxylic acid include oxalic acid, malonic acid, succinic acid, glutaric acid, adipic acid, pimelic acid, suberic acid, azelaic acid, sebacic acid, decanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid, phthalic acid, terephthalic acid, isophthalic acid, naphthalenedicarboxylic acid, trimellitic acid, trimesic acid, cyclohexanedicarboxylic acid and the like. These dicarboxylic acids are used alone or in combination. Examples of the carboxylic anhydride include acetic anhydride, propionic anhydride, succinic anhydride, maleic anhydride, phthalic anhydride, and trimellitic anhydride. These dicarboxylic anhydrides are used alone or in combination. In one embodiment, the polyfunctional carboxylic acids are selected from adipic acid, azelaic acid, terephthalic acid, isophthalic acid and mixture thereof.

The polyfunctional carboxylic acid is present in the reaction mixture of the polyester polyol in an amount of 30% to 70% by weight, preferably 35% to 60% by weight based on the weight of the reaction mixture.

The polycondensation of the polyols and the polyfunctional carboxylic acid may be conducted in the presence of catalyst.

Suitable catalysts are, for example, compounds corresponding to general formula I:

M(OR¹)ₓ (I)

in which M is a metal selected from the group consisting of aluminium, titanium, magnesium or zirconium and R¹ stands for the same or different, linear or branched hydrocarbon radicals containing 1 to 8 carbon atoms and x has a value of 2, 3 or 4. Suitable catalysts are, for example, aluminium alkoxides, titanium alkoxides, magnesium alkoxides and zirconium alkoxides. Particularly suitable catalysts are, for example, aluminium trimethoxide, aluminium triethoxide, aluminium triisopropoxide, aluminium trisec.butoxide, aluminium tritert.butoxide, titanium(IV) methoxide, titanium(IV) ethoxide, titanium(IV) isopropoxide, titanium(IV) butoxide, titanium(IV) 2-ethylhexoxide, zirconium(IV) ethoxide, zirconium(IV) propoxide, zirconium(IV) butoxide, zirconium(IV) isopropoxide, zirconium(IV) tert.butoxide, magnesium methoxide, magnesium ethoxide, magnesium butoxide, magnesium propoxide or magnesium phenoxide.

Other suitable catalysts are tin compounds, more particularly organotin carboxylates, such as dibutyltin dilaurate, dibutyltin diacetate, dibutyltin bis-(2-ethylhexanoate) or other organotin compounds, such as dibutyltin oxide, dibutyltin dimethoxide, dibutyltin dibromide, dibutyltin dichloride, ditert.butyltin dichloride, dimethyltin dibromide, dimethyltin dichloride, diphenyltin dichloride ortin octoate. Of the catalysts mentioned, dibutyltin dilaurate, dibutyltin oxide and dibutyltin diacetate are preferred.

Other suitable catalysts are compounds which contain at least one metal selected from the group consisting of antimony, iron, cobalt, nickel, copper, chromium, manganese, molybdenum, tungsten or lead. The oxides, halides, carboxylates, phosphates or organometallic compounds of the metals mentioned are particularly suitable. Examples of particularly suitable catalysts include iron acetate, iron benzoate, iron naphthenates; iron acetyl acetonates, manganese acetate, manganese naphthenate and manganese acetyl acetonate.

It is known to a person skilled in the art for preparing the polyester polyol according to the present invention. A typical preparation method comprises the steps (1) providing at least one polyol and at least one polyfunctional carboxylic acid to form a mixture, (2) heating stepwise the mixture to 200°C to 220°C and maintaining 20 to 40 hours under nitrogen flow, (3) reducing the pressure stepwise to 10-300 mbar to complete the reaction, and (4) cooling the reaction mixture when the acid value of the reaction mixture is no more than 2, and obtaining a polyester polyol, wherein at least one catalyst is optionally added in the mixture in step (1) and/or (2).

Polyacetals and polyether polyols may be used in the polyol component. By polyacetals are meant compounds obtainable from glycols reacted with aldehydes, for example, diethylene glycol or hexanediol or a mixture thereof condensed with formaldehyde. Polyacetals which can be used in the context of the disclosure may likewise be obtained by the polymerization of cyclic acetals.

The polyether polyol is preferably a polyether diol which comprises primary hydroxyl groups or a mixture of primary and secondary hydroxyl groups. Examples of suitable polyether polyols are polyoxyalkylene polyols such as polyethylene glycol, polypropylene glycol, polytetramethyl glycol and polybutyl glycol. Also, homopolymers or copolymers of the listed polyoxyalkylene polyols as well as mixtures thereof are suitable for the purpose of the present invention. Particularly suitable copolymers are those comprising an adduct of a compound selected from the group consisting of ethylene glycol, propylene glycol, diethylene glycol, propylene glycol, triethylene glycol, 2-ethylhexandiol-1,3-glycerine, trimethylolpropane, trimethylolethane, tris(hydroxyphenyl)propane, triethanolamine and triisopropylamine with at least one compound selected from the group consisting of ethylene oxide, propylene oxide and butylene oxide.

Further suitable polyols may be used in the polyol component include polycarbonate polyols. Polycarbonate polyols can be obtained, for example, by reacting diols, such as propylene glycol, butane-1,4-diol or hexan-1,6-diol, diethylene glycol, triethylene glycol or tetraethylene glycol, or mixtures of two or more thereof, with diaryl carbonates, for example, diphenyl carbonate, or phosgene.

Likewise suitable used in the polyol component are polyacrylates which carry hydroxy groups. These polyacrylates are obtainable, for example, by polymerizing ethylenically unsaturated monomers which carry an OH group. Monomers of this kind are obtainable, for example, by esterifying ethylenically unsaturated carboxylic acids and difunctional alcohols, the alcohol generally being present in a slight excess. Examples of ethylenically unsaturated carboxylic acids suitable for this purpose are acrylic acid, methacrylic acid, crotonic acid or maleic acid. Corresponding esters carrying OH groups are, for example, 2-hydroxyethyl acrylate, 2-hydroxyethyl methacrylate, 2-hydroxypropyl acrylate, 2-hydroxypropyl acrylate, 2-hydroxypropyl methacrylate, 3-hydroxypropyl acrylate or 3-hydroxypropylmethacrylate or mixtures of two or more thereof.

Examples of such polyester polyols include those commercially available from Henkel, such as Liofol PES 231 and Liofol PES 218.

### The isocyanate terminated prepolymer (A)

According to the present invention, the isocyanate terminated prepolymer (A) is the reaction product of the reaction mixture comprising the isocyanate terminated prepolymer (B) and a polyester polyol as described above.

Other isocyanate-terminated prepolymers known in the art may additionally be used in the reaction mixture. These prepolymers include polytetramethylene ether glycol-diphenylmethane diisocyanate (MDI), polytetramethylene ether glycol-tolylene diisocyanate (TDI), polytetramethylene ether glycol-isophorone diisocyanate, poly(1,4-oxybutylene) glycol-diphenylmethane diisocyanate (MDI), poly(1,4-oxybutylene) glycol-tolylene diisocyanate (TDI), poly(1,4-oxybutylene) glycol-isophorone diisocyanate, polyethylene glycol-diphenylmethane diisocyanate (MDI), polyethylene glycol-tolylene diisocyanate (TDI), polyethylene glycol-isophorone diisocyanate, polypropylene glycol-diphenylmethane diisocyanate (MDI), polypropylene glycol-tolylene diisocyanate (TDI), polypropylene glycol-isophorone diisocyanate, polycaprolactone-diphenylmethane diisocyanate (MDI), polycaprolactone-tolylene diisocyanate (TDI), polycaprolactone-isophorone diisocyanate, polyethylene adipate-diphenylmethane diisocyanate (MDI), polyethylene adipate-tolylene diisocyanate (TDI), polyethylene adipate-isophorone diisocyanate, polytetra-methylene adipate-diphenylmethane diisocyanate (MDI), polytetramethylene adipate-tolylene diisocyanate (TDI), polytetramethylene adipate-isophorone diisocyanate, polyethylene-propylene adipate-diphenylmethane diisocyanate (MDI), polyethylene-propylene adipate-tolylene, diisocyanate (TDI), or polyethylene-propylene adipate-isophorone diisocyanate polyurethanes. If present, such additional isocyanate-terminated prepolymer is contained in the adhesive composition in an amount of no more than 20% by weight, or no more than 10% by weight, or no more than 5% by weight, or more than 1% by weight, or no more than 0.5% by weight of the adhesive composition. In one preferred embodiment, the adhesive composition contains no additional isocyanate-terminated prepolymer.

The isocyanate terminated prepolymer (A) suitable for use in an adhesive according to the invention may have a molecular weight of at least 500 g/mol, but preferably of at least 1000. Isocyanate terminated prepolymer with a molecular weight of at least 2000 are particularly suitable. The upper molecular weight limit is largely determined solely by the consistency of the adhesive which should be at least spreadable, preferably paste-like or, more particularly, liquid. This can optionally be achieved through the use of plasticizers or solvents.

Accordingly, in a preferred embodiment of the invention, the isocyanate terminated prepolymer (A) suitable for use in an adhesive according to the invention has a Brookfield viscosity of 500 to 100000 mPas, for example in the range from 1000 to 20000 mPas or in the range from 2,000 to 10000 mPas (as measured to EN ISO 2555 using a Brookfield RVTDV-II Digital Viscometer, spindle 2, 20 rpm).

In a preferred embodiment, the isocyanate terminated prepolymer (A) has an NCO content of from 0.1% to less than 5%, preferably from 0.5% to 3%, and more preferably from 1% to 2%.

If an additive such as solvent is present, the isocyanate terminated prepolymer (A) may be present in an amount of from 30% to 80% by weight, preferably 40% to 60% by weight of the adhesive composition.

### Additives

The one-component polyurethane adhesive composition according to the present invention may optionally contain additives such as solvent, plasticizer, stabilizer, antioxidant, catalyst and/or adhesion promoter.

In one embodiment, the one-component polyurethane adhesive composition further comprises an adhesion promoter. As used in combination with the isocyanate terminated prepolymer in a pack, the adhesion promoter is inert to the isocyanate terminated prepolymer.

In one embodiment, the adhesion promoter is an alkoxysilane terminated polyisocyanate being a reaction product of a polyisocyanate and a hydrolyzable alkoxysilane compound. The alkoxysilane terminated polyisocyanate is partially or fully terminated with alkoxysilane groups. More preferably, the compound is partially terminated with alkoxysilane groups. Such adhesion promoter can be prepared in accordance with EP 0158893 A1 by reacting for example, at least one hydrolyzable alkoxysilane compound with an excess of a polyisocyanate.

The polyisocyanate can be any compound having on average at least two, i.e. two, three or more terminated isocyanate groups per molecule. As incorporated herein the term "polyisocyanate" encompasses diisocyanate, polymeric isocyanates, and isocyanate-terminated oligomers, prepolymers and polymers. It can be used both individually and in mixtures.

In one embodiment, the polyisocyanate is selected from the group consisting of an aromatic polyisocyanate, an alicyclic polyisocyanate, an aliphatic polyisocyanate, and mixture thereof, and preferably is one or more aromatic polyisocyanates. The polyisocyanate preferably has an NCO content of 20 to 30%. The viscosity of the polyisocyanate is preferably no more than 5000 mPa.s.

Some advantageous polyisocyanates have the general structure O=C=N-X-N=C=O where X is an aliphatic, alicyclic or aryl radical, preferably an aliphatic or alicyclic radical containing 4 to 18 carbon atoms.

Some suitable isocyanates include 1,5-naphthylene diisocyanate, diphenyl methane diisocyanate (MDI) including the 2,2'- 2,4'- and 4,4'- isomers, polymeric MDI (pMDI), hydrogenated MDI (HMDI), xylylene diisocyanate (XDI), tetramethyl xylylene diisocyanate (TMXDI), di- and tetraalkylene diphenylmethane diisocyanate, 4,4'-dibenzyl diisocyanate, 1,3-phenylene diisocyanate, 1,4-phenylene diisocyanate, the isomers of toluene diisocyanate (TDI), 1-methyl-2,4-diisocyanatocyclohexane, 1,6-diiso-cyanato-2,2,4-trimethyl hexane, 1,6-diisocyanato-2,4,4-trimethyl hexane, 1-isocyanatomethyl-3-isocyanato-1,5,5-trimethyl cyclohexane (IPDI), chlorinated and brominated diisocyanates, phosphorus-containing diisocyanates, 4,4'-diisocyanatophenyl perfluoroethane, tetramethoxybutane-1,4-diisocyanate, butane-1,4-diisocyanate, hexane-1,6-diisocyanate (HDI), dicyclohexylmethane diisocyanate, cyclo-hexane-1,4-diisocyanate, ethylene diisocyanate, phthalic acid-bis-isocyanatoethyl ester; diisocyanates containing reactive halogen atoms, such as 1-chloromethylphenyl-2,4-diisocyanate, 1-bromomethylphenyl-2,6-diisocyanate or 3,3-bis-chloromethylether4,4'-diphenyl diisocyanate.

Some suitable isocyanates include isocyanate functional pre-polymers. Such pre-polymers are formed by reacting excess amount of polyisocyanate with a polyol, a polyamine, polythiol, or the combination of them. "Excess" is understood to mean that there are more equivalents of isocyanate functionality from the polyisocyanate compound than equivalents of hydroxyl functionality from the polyol present during reaction to form the pre-polymer. In this disclosure, it is to be understood that the terms polyisocyanate pre-polymer or pre-polymer or isocyanate functional pre-polymer are applied to any compound made according to the forgoing description, i.e., as long as the compound is made with at least a stoichiometric excess of isocyanate groups to isocyanate reactive groups it will be referred to herein as polyisocyanate pre-polymer or a pre-polymer or isocyanate functional pre-polymer.

Sulfur-containing polyisocyanates are obtained, for example, by reaction of 2 mole hexamethylene diisocyanate with 1 mole thiodiglycol or dihydroxydihexyl sulfide. Other suitable diisocyanates are, for example, trimethyl hexamethylene diisocyanate, 1,4-diisocyanatobutane, 1,12-diisocyanatododecane and dimer fatty acid diisocyanate. Suitable diisocyanates are the tetramethylene diisocyanate, hexamethylene diisocyanate, undecane diisocyanate, dodecamethylene diisocyanate, 2,2,4-trimethylhexane-2,3,3-trimethylhexamethylene diisocyanate, 1,3-cyclohexane diisocyanate, 1,4-cyclohexane diisocyanate, 1,3- and 1,4-tetramethyl xylene diisocyanate, isophorone, 4,4-dicyclohexylmethane, tetramethylxylylene (TMXDI) and lysine ester diisocyanate.

Aliphatic polyisocyanates with two or more isocyanate functionality formed by biuret linkage, uretdione linkage, allophanate linkage, and/or by trimerization are suitable.

Suitable at least trifunctional isocyanates are polyisocyanates formed by trimerization or oligomerization of diisocyanates or by reaction of diisocyanates with polyfunctional compounds containing hydroxyl or amino groups. Isocyanates suitable for the production of trimers are the diisocyanates mentioned above, the trimerization products (trimers) of HDI, MDI, TDI or IPDI being preferred.

In one embodiment, the polyisocyanate is selected from HDI, MDI, TDI, IPDI, the oligomer thereof, and mixture thereof, and more preferably is one or more of TDI and HDI trimer, and in particular is HDI trimer in view of the regulation concern.

The hydrolyzable silane compounds may have at least one functional group that is reactive toward isocyanate groups and are known to the skilled person. Functional groups reactive toward isocyanate groups are, in particular, OH groups, thiol groups, carboxyl groups, primary and secondary amino groups, and mixtures thereof, preferably carboxyl groups, primary and secondary amino groups, and mixtures thereof, more preferably primary and secondary amino groups.

Examples of such hydrolyzable silane compounds which contain at least one primary and/or secondary amino group are 3-aminopropyltrimethoxysilane, 3-aminopropyltriethoxysilane, 3-aminopropyltriisopropoxysilane, 2-aminoethyl-trimethoxysilane, 2-amino ethyltriethoxysilane, 2-aminoethyltriisopropoxysilane, aminomethyltrimethoxysilane, aminomethyltriethoxysilane, aminomethyl-triisopropoxysilane, 3-(2-aminoethyl)aminopropyltrimethoxysilane, 3-(2-aminoethyl)aminopropyltriethoxysilane, 3-(2-aminoethyl)aminopropyltriiso-propoxysilane, 2-(2-aminoethyl)aminoethyltrimethoxysilane, 2-(2-arninoethyl)-aminoethyltriethoxysilane, 2-(2-aminoethyl)aminoethyltriisopropoxysilane, 3-(3-aminopropyl)aminopropyltrimethoxysilane, 3-(3-aminopropyl)aminopropyl-triethoxysilane, 3-(3-aminopropyl)aminopropyltriisopropoxysilane, diethylene-triaminopropyltrimethoxysilane, diethylenetriaminopropyltriethoxysilane, N-(n-butyl)-3-aminopropyltrimethoxysilane, N-(n-butyl)-3-aminopropyltriethoxysilane, N-cyclohexylaminomethyltriethoxysilane, N-cyclohexylaminomethyltrimethoxysilane, N-ethyl-γ-aminoisobutyltrimethoxysilane, N-ethyl-γ-aminoisobutyltriethoxysilane, N-(vinylbenzyl)-2-aminoethyl-3-aminopropyltrimethoxysilane hydrochloride, N-phenyl-γ-aminopropyltrimethoxysilane, N-phenyl-γ-aminopropyltriethoxysilane, γ-ureidopropyltrimethoxysilane, γ-ureidopropyltriethoxysilane, N-methyl[3-(trimethoxysilyl)propyl]carbamate, and/or N-trimethoxysilylmethyl-O-methylcarbamate, and also bis[y-(triethoxysilyl)propyl]amine and bis[γ-(trimethoxysilyl)propyl]amine.

Examples of hydrolyzable silane compounds which contain at least one thiol group are 3-mercaptopropyltrimethoxysilane, 3-mercaptopropyltriethoxysilane, 3-mercaptopropyltriisopropoxysilane, 2-mercaptoethyltrimethoxysilane, 2-mercaptoethyltriethoxysilane and/or 2-mercaptoethyltriisopropoxysilane.

In one embodiment, bis[γ-(triethoxysilyl)propyl]amine and bis[γ-(trimethoxysilyl)propyl]amine (bis-AMMO) are particularly preferred as the hydrolyzable silane compound.

In one preferred embodiment, the adhesion promoter is a bis-AMMO partially terminated HDI trimer. In another preferred embodiment, the adhesion promoter is a bis-AMMO partially terminated TDI. Both adhesion promoters are commercially available from Henkel.

If present, the adhesion promoter is present in the adhesive composition in an amount of 1% to 10% by weight, preferably 2% to 8% by weight based on the weight of the adhesive composition.

A catalyst can be used for accelerating the curing reaction of the prepolymer (A) with moisture (water). Examples of the catalyst include tertiary amine compounds and organometallic compounds.

Examples of the tertiary amine compound include triethylamine, triethylenediamine, N,N-dimethylbenzylamine, N-methylmorpholine, diazabicycloundecene (also known as DBU), and the like. Examples of the organometallic compound include a tin compound and a non-tin compound. Examples of the tin compound include dibutyltin dichloride, dibutyltin oxide, dibutyltin dibromide, dibutyltin dimaleate, dibutyltin dilaurate (also known as DBTDL), dibutyltin diacetate, dibutyltin sulfide, tributyltin sulfide, tributyltin oxide, Examples include tributyltin acetate, triethyltin ethoxide, tributyltin ethoxide, dioctyltin oxide, tributyltin chloride, tributyltin trichloroacetate, and tin 2-ethylhexanoate. Examples of non-tin compounds include titanium compounds such as dibutyltitanium dichloride, tetrabutyltitanate, and butoxytitanium trichloride, lead compounds such as lead oleate, lead 2-ethylhexanoate, lead benzoate, and lead naphthenate. -Iron compounds such as iron ethylhexanoate and iron 2,4-pentadionate, cobalt compounds such as cobalt benzoate and cobalt 2-ethylhexanoate, zinc compounds such as zinc naphthenate and zinc 2-ethylhexanoate and zirconium naphthenate. Among these, diazabicycloundecene (alias: DBU), dibutyltin dilaurate (alias: DBTDL), zinc 2-ethylhexanoate and the like are preferable in terms of reactivity and hygiene.

However, in one preferred embodiment, the one-component adhesive composition contains no curing/crosslinking catalyst meanwhile the desired properties such as fast curing of the adhesive still can be achieved.

The adhesive composition or the adhesive system according to the present invention may contain a solvent or contain no solvent. If present, examples of organic solvents would include heterocyclic, aliphatic, or aromatic hydrocarbons such as toluene, isophorone, xylene, mono- or polyhydric alcohols such as ethylhexanol, butoxypropanol, isopropanol, butyl diglycol, methanol, ethanol, propanol, and butanol, ethers such as diethylene glycol dimethyl ether and dipropylene glycol methyl ether, ethyl glycol and butyl glycol, esters such as ethyl acetate, butyl acetate, pentyl acetate, or ethyl ethoxypropionate, ketones such as cyclohexanone, methyl ethyl ketone (MEK), methyl amyl ketone, methyl isobutyl ketone (MIBK), and acetone, and amides, such as N-methylpyrrolidone, N-ethylpyrrolidone, and dimethylformamide.

In one preferred embodiment, the one-component adhesive composition contains at least one organic solvent, preferably ethyl acetate. If present, the organic solvent is present in an amount of from 20% to 70% by weight, preferably 30% to 60% by weight of the adhesive composition.

The adhesive composition according to the invention has a viscosity at the application temperature of 500 to 100000 mPas, for example 1,000 to 20,000 mPas or 2,000 to 10,000 mPas (as measured to EN ISO 2555 using a Brookfield RVTDV-II Digital Viscometer, spindle 2, 20 r.p.m.).

The adhesive composition according to the invention contains NCO groups in such quantities that significant curing occurs after application of the adhesive to a substrate. The NCO content should preferably be in the range from 0.1% to less than 10%, preferably from 0.5% to 5%, and more preferably from 1% to 2% (by weight). The NCO content is determined to DIN EN 1242 (corresponds to BS EN 1242).

The adhesive composition according to the invention may be prepared both by a single-stage process and in a multistage process under the typical process conditions known to the expert for the production of one-component adhesive composition containing isocyanate terminated prepolymers.

Surprisingly, the inventors have found that the one-component polyurethane adhesive composition can achieve a good curing upon application and a high bonding strength for film lamination.

In one preferred embodiment, the cured adhesive exhibited a bonding strength of no less than 3 N/15mm, after being stored for 24 hours according to DIN 53357 and/or no less than 4 N/15mm after being stored for 48 hours according to DIN 53357 and/or o less than 3 N/15mm, after being stored for 7 days according to DIN 53357.

In another preferred embodiment, the cured adhesive exhibited a bonding strength of no less than 3 N/15mm, and preferably no less than 4 N/15mm after being stored at 40°C for 7 days and sterilized at 131 °C for 30 min according to DIN 53357.

In yet another preferred embodiment, the one-component adhesive composition is storage stable at least for 8 weeks, or even at least for 16 weeks under room temperature or 40°C without phase separation and significant viscosity change/gelling.

In another aspect, the present invention is directed to a flexible packaging material comprising a first layer comprised of a first polyolefin or first polyester; a second layer comprised of a second polyolefin, which may be the same or different from the first polyolefin, a second polyester, which may be the same as or different from the first polyester, or a metal foil; and cured adhesive of the present invention bonding the first layer to the second layer.

In yet another aspect, the present invention is directed to a method of making a flexible film laminate, comprising: combining the components of polyurethane adhesive system according to the present invention at a predetermined weight ratio to form an adhesive mixture; disposing the adhesive mixture on at least a portion of one surface of a first flexible film, joining the first flexible film and a second flexible film wherein the adhesive composition is interposed between the first flexible film and the second flexible film; and curing the adhesive composition.

The film or films to be coated and adhered to each other using the adhesive compositions/systems may be comprised of any of the materials known in the art to be suitable for use in flexible packaging, including both polymeric and metallic materials as well as paper (including treated or coated paper). Thermoplastics are particularly preferred for use as at least one of the layers. The materials chosen for individual layers in a laminate are selected to achieve specific desired combinations of properties, e.g., mechanical strength, tear resistance, elongation, puncture resistance, flexibility/stiffness, gas and water vapor permeability, oil and grease permeability, heat sealability, adhesiveness, optical properties (e.g., clear, translucent, opaque), formability, merchantability and relative cost. Individual layers may be pure polymers or blends of different polymers. The polymeric layers are often formulated with colorants, anti-slip, anti-block, and anti-static processing aids, plasticizers, lubricants, fillers, stabilizers and the like to enhance certain layer characteristics.

Particularly preferred polymers for use include, but not limited to, polyethylene (including low density polyethylene (LDPE), medium density polyethylene (MDPE), high density polyethylene (HPDE), high molecular weight, high density polyethylene (HMW-HDPE), linear low density polyethylene (LLDPE), linear medium density polyethylene (LMPE)), polypropylene (PP), oriented polypropylene, polyesters such as poly (ethylene terephthalate) (PET) and poly (butylene terephthalate) (PBT), ethylene-vinyl acetate copolymers (EVA), ethylene-acrylic acid copolymers (EAA), ethylene-methyl methacrylate copolymers (EMA), ethylene-methacrylic acid salts (ionomers), hydrolyzed ethylene-vinyl acetate copolymers (EVOH), polyamides (nylon), polyvinyl chloride (PVC), poly(vinylidene chloride) copolymers (PVDC), polybutylene, ethylene-propylene copolymers, polycarbonates (PC), polystyrene (PS), styrene copolymers, high impact polystyrene (HIPS), acrylonitrile-butadienestyrene polymers (ABS), acrylonitrile copolymers (AN), polyamide (Nylon), polylactic acid (PLA), regenerated cellulose films (Cellophane).

The polymer surface may be treated or coated, if so desired. For example, a film of polymer may be metallized by depositing a thin metal vapor such as aluminum onto the film's surface. Metallization may enhance the barrier properties of the finished laminate. The polymer film surface may also be coated with anti-fog additive or the like or subjected to a pretreatment with electrical or corona discharges, or ozone or other chemical agents to increase its adhesive receptivity. A coating of an inorganic oxide such as SiOx or AlOx may also be present on the polymer surface (for example, an SiOx- or AlOx-coated PET film).

One or more layers of the laminate may also comprise a metal film or foil, such as aluminum foil, or the like. The metal foil will preferably have a thickness of about 5 to 100 µm.

The individual films comprising the laminates can be prepared in widely varying thicknesses, for example, from about 5 to about 200 microns. The films, foils, and laminating adhesive composition can be assembled into the laminate by using any one or more of the several conventional procedures known in the art for such purpose. For instance, the adhesive formulation may be applied to the surface of one or both of two films/foils by means of extrusion, brushes, rollers, blades, spraying or the like and the film/foil surfaces bearing the adhesive composition brought together and passed through a set of rollers (often referred to as nip rollers) which press together the film/foils having the adhesive composition between the films/foils. The resulting laminate may be rolled or wound onto a reel for ageing. The adhesive may be applied by conventional techniques; e.g., a 3/4-roller coating mechanism in the case of the use of a solvent-free system, or a 2-roller coating mechanism in the case of the use of a solvent-containing system.

The coating weight at which the adhesive formulation can be applied to the surface of a film layer is in the range of about 0.1 to about 10 g/m², and more typically about 2.0 to about 6.0 g/m².

Laminates prepared in accordance with the present disclosure may be used for packaging purposes in the same manner as conventional or known flexible laminated packaging films. The laminates are particularly suitable for forming into flexible pouch-shaped container vessels capable of being filed with a foodstuff and sealed. For example, two rectangular or square sheets of the laminate may be piled in the desired configuration or arrangement; preferably, the two layers of the two sheets which face each other are capable of being heat-sealed to each other. Three peripheral portions of the piled assembly are then heat-sealed to form the pouch. Heat-sealing can easily be accomplished by means of a heating bar, heating knife, heating wire, impulse sealer, ultrasonic sealer, or induction heating sealer.

The foodstuff is thereafter packed in the so-formed pouch. If necessary, gasses injurious to the foodstuff such as air are removed by known means such as vacuum degasification, hot packing, boiling degasification, or steam jetting or vessel deformation. The pouch opening is then sealed using heat. The packed pouch may be heated at a later time.

An embodiment of the food packaging material according to the present invention is exemplified in FIG. 1, but the present invention is not limited to these embodiments. FIG. 1 shows a sectional view of a food packaging film 10. This food packaging film 10 is a laminate comprising one metal foil 14 and two plastic films 12 and 13, and the plastic films 12 and 13 are adhered on both sides of the metal foil 14 by using adhesive layers 11, respectively. More specifically, the plastic film 12 is preferably, for example, a polyethylene terephthalate (PET) film, the film 13 is preferably a polyolefin film, more preferably a PE film. The metal foil 14 is inserted between them. The metal foil 14 may be, for example, an aluminum foil. The film 12 is bonded to the metal foil 14, and the film 13 is bonded to the metal foil 14 by the adhesive layers 11 for food packaging films, respectively. Examples Of the film to be laminated include plastic films produced from polyethylene terephthalates, nylons, polyethylenes, polypropylenes, and polyvinyl chlorides; metal foils such as aluminum foil; deposited films such as metal deposited films and silica deposited films; metal films produced from stainless steel, steel, copper, and lead. Moreover, the thickness of the film to be laminated, for example, plastic film is preferably within a range of 5 to 200 µm.

The invention will be illustrated in more detail by way of the following examples which are not to be understood as limiting the concept of the invention.

### Examples

The following materials were used in the examples.

Trixene DCP is an isocyanate terminated prepolymer of TDI and polypropylene glycol, commercially available from Laxness.

PES 231 is a polyester polyol having an OH value of 110 mg KOH/g and Mn about 1800 g/mol, commercially available from Henkel.

PES 218 is a polyester polyol having an OH value of 133 mg KOH/g and Mn about 1300 g/mol, commercially available from Henkel.

Solvent is ethyl acetate obtained from Brenntag.

AP (adhesion promoter) 1 is bis[γ-(trimethoxysilyl)propyl]amine (bis-AMMO) partially terminated HDI trimer, commercially available from Henkel.

AP 2 is bis-AMMO partially terminated TDI, commercially available from Henkel.

### One-component adhesive composition

### Examples 1 to 4

The adhesive compositions for food packaging films from the examples were produced by first mixing Trixene DCP with polyester polyol and kept the temperature under 75°C-80°C. After the reaction of the polyester with Trixene DCP was completed, the reaction product was cooled and further components were added and mixed to homogeneity. The respective components and reactants are shown in in Table 1.

**Table 1. Formulations of adhesive compositions (by weight parts)**

| | Ex. 1 | Ex. 2 | Ex. 3 | Ex. 4 |
|---|---|---|---|---|
| Trixene DCP | 38.6 | 42.0 | 42.0 | 38.8 |
| PES 231 | 28.2 | - | - | 27.2 |
| PES 218 | - | 24.8 | 24.0 | - |
| AP1 | 4.0 | 4.0 | - | - |
| AP2 | - | - | 4.0 | 4.0 |
| Solvent | 29.2 | 29.2 | 30.0 | 30.0 |

The adhesive systems for food packaging films and samples for evaluation test were produced as follows.

The substrates to be coated were formatted to DIN A4 size. A PET/Aluminium carrier foil duplex was coated with 4 g/m² of respective adhesive composition. The carrier film thus coated was then dried for 1 minutes at 90°C in a drying oven. Then the polyethylene film was pressed against the coated side. The composites produced in this way were cured under pressure (weighted 8 kg) between metal plates at 40°C in the drying oven.

The obtained adhesive for food packaging films were evaluated by the following test procedures and the testing results are shown in Tables 2.

### Bonding strength after storage at 40 °C over period

After the laminates were prepared and stored at 40 °C for 1, 2 and 7 days, the bonding strength of the adhesive systems was measured according to DIN 53357.

### Bonding strength after storage at 40 °C over period and sterilization

After the laminates were prepared and stored at 40°C for 7 and 14 days, the laminates were sterilized for 30 minutes at 131°C. Directly after sterilization process, the bond strength of the adhesive was measured according to DIN 53357.

### Storage stability

The adhesive composition according to the Examples were stored in a screw-cap jar at room temperature and at 40°C in an oven for 16 weeks. The storage stability of the one-component adhesive compositions was evaluated as "Passed" if no phase separation and significant viscosity change/gelling could be visually observed right after 16 weeks, and was evaluated as "Failed" if phase separation or significant viscosity change/gelling could be visually observed right after 16 weeks.

**Table 2. Testing results of the one-component adhesives (in N/15mm)**

| Items | Ex. 1 | Ex. 2 | Ex. 3 | Ex. 4 |
|---|---|---|---|---|
| Bonding strength after 1 day | 4.2 | 3.2 | 3.1 | 4.9 |
| Bonding strength after 2 days | 11.2 | 7.0 | 4.2 | 10.3 |
| Bonding strength after 7 days | 9.0 | 3.8 | 3.1 | 8.9 |
| Bonding strength after 7 days with sterilization | 4.7 | 4.1 | 2.6 | 3.2 |
| Bonding strength after 14 days with sterilization | 4.6 | 5.9 | 2.8 | 2.8 |
| Storage stability | Passed | Passed | Passed | Passed |

As can be seen from Table 2, the one-component adhesive composition according to the present invention all exhibited good curing performance and the cured products all exhibited good bonding strength even after being treated under high demanding conditions. In addition, the one-component adhesive composition according to the present invention are all storage stable for at least 16 weeks.

## Claims

1. One-component polyurethane adhesive composition, comprising:
an isocyanate terminated prepolymer (A) being a reaction product of a reaction mixture comprising:
an isocyanate terminated prepolymer (B) being a reaction product of a reaction mixture comprising toluene diisocyanate and a polyether polyol, and
a polyester polyol.

2. The polyurethane adhesive composition according to claim 1, wherein the polyether polyol is selected from a polyoxyalkylene polyol, the homopolymer thereof, the copolymer thereof, and mixture of the above.

3. The polyurethane adhesive composition according to claim 1 or 2, wherein the polyether polyol is a polyoxyalkylene diol, and preferably is selected from polyethylene glycol, polypropylene glycol, polytetramethyl glycol, polybutyl glycol and mixture thereof.

4. The polyurethane adhesive composition according to any of claims 1 to 3, wherein the polyester polyol has a hydroxyl value of from 5 to 350 mg KOH/g preferably from 50 to 200 mgKOH/g, and more preferably from 100 to 150 mgKOH/g.

5. The polyurethane adhesive composition according to any of claims 1 to 4, wherein the polyester polyol has a number averaged molecular weight of from 200 to 20000 g/mol, preferably from 500 to 10000 g/mol, and more preferably from 1000 to 5000 g/mol.

6. The polyurethane adhesive composition according to any of claims 1 to 5, wherein the isocyanate terminated prepolymer (B) has a free toluene diisocyanate content of no more than 0.5% by weight and preferably no more than 0.1% by weight of the prepolymer (B).

7. The polyurethane adhesive composition according to any of claims 1 to 6, wherein the isocyanate terminated prepolymer (B) has an NCO content of from 5% to 15%, preferably from 8% to 12%.

8. The polyurethane adhesive composition according to any of claims 1 to 7, wherein the isocyanate terminated prepolymer (A) has an NCO content of from 0.1% to less than 5%, preferably from 0.5% to 3%, and more preferably from 1% to 2%.

9. The polyurethane adhesive composition according to any of claims 1 to 8, wherein the isocyanate terminated prepolymer (A) is present in an amount of from 30% to 80% by weight, preferably 40% to 70% by weight of the adhesive composition.

10. The polyurethane adhesive composition according to any of claims 1 to 9, further comprising an organic solvent, preferably present in an amount of from 20% to 70% by weight, preferably 30% to 60% by weight of the adhesive composition.

11. The polyurethane adhesive composition according to any of claims 1 to 10, further comprising an adhesion promoter, preferably present in an amount of from 1% to 10% by weight, preferably 2% to 8% by weight of the adhesive composition.

12. The polyurethane adhesive composition according to claim 11, wherein the adhesion promoter is an alkoxysilane terminated polyisocyanate being a reaction product of a polyisocyanate and a hydrolyzable alkoxysilane compound.

13. The polyurethane adhesive composition according to any of claims 1 to 12, comprising no catalyst for curing.

14. A flexible packaging material comprising a first layer comprised of a first polyolefin or first polyester; a second layer comprised of a second polyolefin, which may be the same or different from the first polyolefin, a second polyester, which may be the same as or different from the first polyester, or a metal foil; and cured product of the polyurethane adhesive composition according to any of claims 1 to 13 bonding the first layer to the second layer.

15. A method of making a flexible film laminate, comprising:
providing the one-component polyurethane adhesive composition according to any of claims 1 to 13;
disposing the adhesive composition on at least a portion of one surface of a first flexible film, joining the first flexible film and a second flexible film wherein the adhesive composition is interposed between the first flexible film and the second flexible film; and
curing the adhesive composition.
